# EUROPEAN PATENT SPECIFICATION

(11) **EP 2 519 668 B1**
(45) Date of publication and mention of the grant of the patent: **22.07.2015**
(21) Application number: 10799254.7
(22) Date of filing: 29.12.2010
(51) Int. Cl.: D04H 13/00, B32B 5/26, F41H 5/04

(54) **ENHANCED LIGHTWEIGHT BALLISTIC MATERIALS**
VERBESSERTE LEICHTGEWICHTIGE GESCHOSSMATERIALIEN
MATÉRIAUX BALISTIQUES LÉGERS AMÉLIORÉS

(30) Priority: 29.12.2009 US 290567 P
(43) Date of publication of application: 07.11.2012
(73) Proprietor: E. I. du Pont de Nemours and Company, Wilmington, DE 19898 (US)
(72) Inventor: BADER, Yves, F-01170 Crozet (FR); PONT, Nicolas, F-74160 St Julien en Genevois (FR)
(74) Representative: Morf, Jan Stefan
(86) International application number: PCT/US2010/062297
(87) International publication number: WO 2011/082201

(56) References cited:
- WO-A1-2005/001373
- WO-A2-2007/145673
- US-A1- 2004 132 368
- US-A1- 2007 207 689
- US-A1- 2009 282 596

## Description

### FIELD OF THE INVENTION

The present invention relates to enhanced, light weight energy absorbing materials and methods of making them. These materials have utility in the manufacture of ballistic vests, hard and soft armor, stab and knife protection systems, and anti-ballistic systems.

### BACKGROUND OF THE INVENTION

Ballistic grade fibers, such as aramid fibers, and items made thereof are well known in the art. They are commonly used in aerospace and military applications, for ballistic body armor fabrics or as an asbestos substitute.

US 2009/0282596 A1 discloses body armor articles for resisting ballistic objects. The articles comprise woven fabric layers and sheet layers which are stacked together. The fabric is not formed by a felting process.

Needle felting, sometimes referred to herein as needle punching or simply needling, is a process used in the textile industry in which an element such as a barbed needle is passed into and out of a fabric to entangle the fibers to produce felts. Needle felting is well known in the art, and descriptions of this method can be found in these documents such as US5989375.

The use of felts in anti-ballistic systems is known. US7101818 discloses an article made of at least one woven layer of ballistic grade fiber and at least one nonwoven layer of fabric, wherein both layers are entangled with each other by needle felting process.

The combination of woven and nonwoven ballistic grade fibers allowed to manufacture anti-ballistic systems that offered better protection than comparable systems made solely with woven fibers.

The needle felting process stabilizes the individual layers and prevents the individual layers from separating in a ballistic event by intermingling the fibers of both layers and putting them into close contact, which is why the anti-ballistic system disclosed in US7101818 outpertorms systems that consists solely of woven layer that are not needle felted.

However, in the anti-ballistic systems of US7101818, the felt is only used to stabilize the individual layers.

In ballistic events, and especially in ballistic events where the angle of the incoming projectile trajectory is non-normal (non-90°) to the plane of the protective system, projectiles can bounce off the protective system and continue on a different trajectory. This is also called a ricochet.

Ricochets are a common danger of shooting because after bouncing off an object, the projectile that ricochets poses an 'unpredictable' and serious danger of causing collateral damage to bystanders, animals, objects or even the wearer of the hit personal protective system. When the deformed projectile does hit a bystander or wearer it can become very dangerous. Instead of cleanly traveling through the body, the bullet can behave more like a hollow point bullet, causing a larger wound cavity, or even fragmenting and causing multiple wounds.

The likelihood of a ricochet occurring becomes larger the smaller the angle of the incoming projectile trajectory is in respect to the plane of the protective system.

Projectiles are quite likely to ricochet off flat, hard surfaces such as concrete or steel, however a ricochet can occur on almost any surface including the ballistic pack of a personal protective system, given a flat enough angle when hit.

Materials that are soft, give away easily, or can absorb the impact have a lower incidence of ricochet. This is due to the fact that the kinetic energy that is partially absorbed by the soft material decelerates the projectile and flattens its angle of departure, thus redirecting the projectile into the material instead of ricocheting.

However, in cases where the incoming projectile trajectory is near the edges of the protective system and the angle shallow, the projectile can penetrate one or more layers of protective material and travel between adjacent layers of protective material to exit trough the flange of the protective system. Such an event can be fatal, if for example, the projectile exits on the upper flanges that surround the neck, resulting in severe cranio-maxillo-facial trauma.

In an effort to improve the protection against knife and needle attacks, ballistic packs are now commonly reinforced with polymeric resins. Such a technology is described in, for example, WO0137691A1.

The polymeric resins may be calendered, laminated or heat pressed onto the ballistic pack or each individual layer of protective tissue.

However, this stiffens and hardens the ballistic pack to a point where the likelihood of ricochet increases significantly.

In some cases, anti-ballistic vest manufacturers have resorted to use polymer foams to reduce ricochet likelihoods and to reduce backface trauma. These polymer foams, such as for example polyurethane foam, are used as inner lining in contact with the body of the wearer.

These polymer foams offer little or no ballistic protection in the sense that if a projectile penetrates the ballistic layer, the lining is not able to stop it because of its low protective property.

On the other hand, the use of felts as inner linings, especially of felts having ballistic protection properties, entails other disadvantages, such as the low resilience of ballistic felts.

By low resilience material it is meant a material that does not spring back in to its original shape when deformed or compressed several times.

While the felts have an original thickness and cushioning effect that provides protection against backface trauma and reduces the likelihood of ricochets, prolonged wearing of the anti-ballistic vest and the pressure of the fastening gradually compresses the thick felt layer into a thinner, more dense felt layer. This compressed thick layer will no more have the cushioning effect of the original layer and will therefore be less effective in preventing ricochets, thus exposing the wearer and bystanders to higher risk.

In addition, the felts tend to break open during a ballistic event because of the strain of deformation caused by a projectile impact.

Furthermore, the felts show problems when sewn onto another layer of fabric of the anti-ballistic vest. The wearing of the anti-ballistic vests as well as ballistic events themselves create clearances where the felt was stitched, resulting in loose stitches.

There is a need for an improved inner lining which not only has ballistic properties, but also reduces the likelihood of ricochets and does not lose said property during its use.

### SUMMARY OF THE INVENTION

The present invention relates to fabric comprising at least one woven layer and at least one nonwoven layer, wherein the number ratio between the at least one woven layer and the at least one nonwoven layer is in the range of 0.1 to 1, and further wherein the at least one woven layer comprises fibers having a tenacity of from 180 centi-Newton(cN)/Tex to 320 cN/Tex and a tensile modulus of from 3600 cN/Tex to 10600 cN/Tex, and the at least one nonwoven layer comprises a blend of at least one aramid fiber and at least one polyester fiber, wherein the fabric is formed by combining the at least one woven layer with at least one nonwoven batting layer in a felting loom to form a stack and subjecting the resulting stack then to a felting process, which combines the woven layers and nonwoven batting layers into said fabric.

The fabric according to the present invention can particularly be used in the manufacture of ballistic vests, hard and soft armor, stab and knife protection systems, and anti-ballistic systems, and they provide a highly reduction of likelihood of ricochets using such systems.

### DETAILED DESCRIPTION

The fabric according to the present invention comprises at least one woven layer and at least one nonwoven layer, wherein the number ratio between the at least one woven layer and the at least one nonwoven layer is in the range of 0.1 to 1, and further wherein the at least one woven layer comprises fibers having a tenacity of from 180 cN/Tex to 320 cN/Tex and a tensile modulus of from 3600 cN/Tex to 10600 cN/Tex, and the at least one nonwoven layer comprises a blend of at least one aramid fiber and at least one polyester fiber, wherein the fabric is formed by combining the at least one woven layer with at least one nonwoven batting layer in a felting loom to form a stack and subjecting the resulting stack then to a felting process, which combines the woven layers and nonwoven batting layers into said fabric.

Suitable fiber materials for the at least one woven layer of the fabric according to the invention may be ballistic grade fibers. The ballistic grade fibers can be chosen among para-aramid fibers (commercially available as Kevlar® from DuPont de Nemours), poly (p-phenylene-2,6-benzobisoxazole) (PBO), high molecular weight polyethylene fibers (HMPE), ballistic nylons and/or combinations thereof.

Weave styles useful in the at least one woven layer of the fabric according to the present invention include plain, basket, twill, satin and other complex weaves including, but not limited to, unidirectional, quasi unidirectional, multi-axial weaves described in EP0805332, and three dimensional materials, alone or in combination.

In a unidirectional fabric the yarns all run in the same direction. In a quasi-unidirectional fabric the yarns may be laid in more than one direction and some yarns are not totally flat. As used herein, "unidirectional" encompasses both unidirectional and quasi-unidirectional fabric, unless the context requires otherwise.

Suitable ballistic grade fibers for the at least one woven layer of the fabric according to the present invention are fibers having a tenacity of from 180 cN/Tex to 320 cN/Tex, and a tensile modulus of from 3600 cN/Tex to 10600 cN/Tex.

The terms tenacity and tensile modulus stated in the present description are known to the person skilled in the art.

The at least one woven layer of the fabric according to the present invention may be laminated, calendered, heatpressed, impregnated or otherwise reinforced with polymeric resins which may be thermoplastic resins or thermoset resins.

In the case where the polymeric resin is a thermoset resin, the thermoset resin may be hydrogenated nitrile butadiene (HNBR), styrene butadiene (SBR), ethylene propylene diene monomer (EPDM), fluoronated hydrocarbon (FKM), acrylic rubber (ACM), ethylene acrylic rubber (AEM), polybutadiene, chloro isobutylene isoprene (CIIR), isobutylene isoprene butyl (IIR), polyurethane acrylonitrile butadiene carboxy monomer (XNBR), polyvinyl butyral (PVB), phenolic resins and/or combinations thereof.

Preferably, the thermoset resin may be a polyvinyl butyral (PVB), phenolic resin and/or combinations thereof.

In the case where the polymeric resin is a thermoplastic resin, the thermoplastic resin may be an ionomer, polyolefin, polyamide, polyimide, polycarbonate, polyurethane, polyether etherketone, phenolic-modified resin, and/or mixtures thereof.

Preferably the thermoplastic resin may be a polyamide, a polyolefin, a ionomer and/or mixtures thereof.

More preferably, the thermoplastic resin is a ionomer.

lonomers are thermoplastic resins that contain metal ions in addition to the organic backbone of the polymer.

In the case where the thermoplastic is a ionomer, the ionomer is a copolymer of an olefin monomer, such as for example ethylene, and a partially neutralized, unsaturated C3-C8 carboxylic acid monomer. Preferably, the carboxylic acid is acrylic acid (AA) or methacrylic acid (MAA). Preferred neutralizing agents are sodium ions, potassium ions, zinc ions, magnesium ions, lithium ions and combinations thereof.

The acid groups of the ionomers useful in the present invention are neutralized from 1.0 to 99.9% and preferably from 20 to 75%. lonomers can optionally comprise at least one softening comonomer that is co-polymerizable with ethylene.

lonomers and their methods of manufacture are described in US Patent No. 3,264,272. Suitable ionomers for use in the present invention are commercially available under the trademark Surlyn® from E. I. du Pont de Nemours and Company, Wilmington, Delaware, USA.

The at least one nonwoven layer of the fabric according to the present invention can be obtained by a felting process.

The felting process can be any suitable felting process, such as for example needle felting, waterjet felting, airjet felting or glue felting.

Preferably, the felting process is needle felting process.

The needle felting process can be modified depending on the amount of woven and nonwoven layers that are desirable in the fabric according to the invention.

Modifications of the needling process may also include the amount of needle punches per unit area and/or the depth of those punches.

The optimal amount and type of needling, and the amount of nonwoven fiber can be determined by ballistic testing, preferably performed using standard ballistic testing procedures, such as Home Office Scientific Development Branch (HOSDB) HG1/A Standard, the standard as known at a person skilled in the art.

Suitable fiber materials for the at least one nonwoven layer according to the present invention may be high performance ballistic resistant fibers, especially ballistic grade fibers having a tenacity of from 180 cN/Tex to 320 cN/Tex, and a tensile modulus of from 3600 cN/Tex to 10600 cN/Tex (hereinafter "ballistic grade nonwoven fibers").

The ballistic grade nonwoven fibers may be selected from aramid fibers, extended chain polyethylene fibers, PBO (poly (p-phenylene-2,6-benzobisoxazole) fibers, high molecular weight polyethylene fibers (HMPE), regenerated cellulose, rayon, polynosic rayon, cellulose esters, acrylics, modacrylic, polyamides, polyolefins, polyester such as poly(trimethylene) terephthalate or polyethylene terephthalate, rubber, synthetic rubber, saran, glass, polyacrylonitrile, acrylonitrile-vinyl chloride copolymers, polyhexamethylene adipamide, polycaproamide, polyundecanoamide, polyethylene and polypropylene.

Preferably, the ballistic grade nonwoven fibers are aramid fibers, extended chain polyethylene fibers or PBO fibers.

Most preferably, the ballistic grade nonwoven fibers are aramid fibers.

In the case where the ballistic grade nonwoven fibers are aramid fibers, the aramid fibers can be a para-aramid fibers or a meta-aramid fibers. Preferably, the aramid are para-aramid fibers.

In a further embodiment, the at least one nonwoven layer comprises a blend of at least one aramid fiber and at least one polyester. Preferably, the polyester can be selected from the group consisting of polyethylene terephthalate and poly(trimethylene) terephthalate.

Preferably, the blend comprises from 70 to 99 % by weight of aramid fibers and from 1 to 30 % by weight of polyester, relative to the total weight of the at least one nonwoven layer.

More preferably, the blend comprises from 75 to 90 % by weight of aramid fibers and from 10 to 25 % by weight of polyester, relative to the total weight of the at least one nonwoven layer.

Most preferably, the blend comprises 75 % by weight of aramid fibers, relative to the total weight of the nonwoven fabric, and 25 % by weight of polyester, relative to the total weight of the at least one nonwoven layer.

One advantage of this embodiment is that the at least one nonwoven layer according to the present invention has a high mechanical resiliency. The high mechanical resiliency is warranted by the polyester fibers that are blended into the nonwoven layer.

The polyester fibers allow prolonged use of the fabric according to the present invention, because the nonwoven layer will not flatten and decrease in thickness over time. This, in turn, will maintain the cushioning effect of the nonwoven layer that effectively reduces the ricochet likelihood.

It is possible according to this invention to use more than 25 % by weight of the polyester fiber, based on the total weight of the blend of the at least one aramid fiber and at least one polyester fiber.

However, amounts in excess of 30 % by weight of polyester fiber are not desirable because of the flammability and heat sensitivity of polyester fiber. Flammability may be reduced by methods known in the art, such as the addition of flame retardants, additives, fillers and/or combinations thereof. Flame retardants will reduce the flammability of the polyester fiber, but will not prevent the melting and softening of the polyester fiber when heated by flames. Softened and molten polyester fibers will be compacted and will no longer confer the desirable properties to the fabric according to the present invention, and, therefore, the likelihood of ricochets will rise unfavorably.

In a preferred embodiment, the at least one nonwoven layer comprises fibers having non-uniform length, such as for example two-cut fibers or multiple-cut fibers.

The term two-cut fibers stated in the present description are fibers which are of two different lengths, and the term multiple-cut fibers stated in the present description are fibers which are of more than two different lengths.

The use of two-cut fiber blends or multiple-cut fiber blends allows a better level of entanglement between the nonwoven layer and the woven layer, because longer fibers will be pushed deeper into the woven layer during the felting process described below.

In another preferred embodiment, the nonwoven layer comprises fibers having non-uniform length, wherein the fibers having non-uniform length have different linear mass densities, depending on the length of the fiber.

Fine fibers, such as for example 1.7 dtex fibers having a reduced cut length of 38 mm, can be blended with coarser fibers, such as for example 2.5 dtex fibers having a larger cut length of 63 mm to form the nonwoven batting layer wherein batting layer means the unfelted layer that will form the at least one nonwoven layer upon entanglement by felting.

The term dtex stated in the present description are known to the person skilled in the art.

It is believed that the better level of entanglement results from the fine and short fibers of the nonwoven batting layer being directed into the woven layer during the felting process, thereby extensively contacting the woven layer and providing high levels of entanglement.

On the other hand, the coarse fibers provide for the thickness and resilience properties of the nonwoven layer.

Prior to the felting process, the at least one woven layer is combined with at least one nonwoven batting layer in a felting loom to form a stack.

The resulting stack is then subjected to a felting process, which combines the woven layers and nonwoven batting layers into the fabric according to the present invention.

The stack may be felted by needle felting, waterjet felting, airjet felting or glue felting, thereby felting the at least one nonwoven batting layer to become the at least one nonwoven layer of the fabric according to the invention.

The felting process is a process known to the person skilled in the textile arts, and shall not be discussed in further detail for the sake of brevity.

Preferably, the number ratio between the at least one woven layer and the at least one nonwoven layers is in the range of 0.1 to 1.

More preferably, the number ratio between the at least one woven layer and the at least one nonwoven layers in the range of 0.1 to 0.9.

Most preferably, the number ratio between the at least one woven layer and the at least one nonwoven layers is smaller than 2/3 or 0.66, particularly is in the range of 0.1 to 0.66

The weight ratio between the at least one woven layer and the at least one nonwoven layer may be between 0.1 and 5.

Preferably, the weight ratio between the at least one woven layer and the at least one nonwoven layer may be between 0.1 and 3.

More preferably, the weight ratio between the at least one woven layer and the at least one nonwoven layer may be between 0.3 and 1.5.

Most preferably, the weight ratio between the at least one woven layer and the at least one nonwoven layer may be between 0.3 and 1.

The total amount of layers, consisting of the sum of the number of woven layers and the number of nonwoven layers, can be from 2 to 10, preferably from 2 to 6 and more preferably from 2 to 4.

Most preferably, the total amount of layers, consisting of the sum of the number of woven layers and the number of nonwoven layers is 2, while at the same time having a number ratio of 1.

The woven layers of the fabric according to the present invention enable the fabric to be sewn into or between ballistic packs or at the backface of an anti-ballistic systems. One advantage of the fabric according to the present invention is that during extensive periods of wearing, the woven fabric layer holds finished material tightly in place, because the woven fabric layer has an regular structure that prevents the formation of clearances.

If the fabric would only be made of a nonwoven felt layer and were subsequently sewn to the back-face of or into an anti-ballistic system, the nonwoven layer would give way around the stitches and form clearances that would negatively affect the function of the felt.

The fabric according to the present invention provides multiple advantages over previously used solutions for reducing the likelihood of ricochets which are commonly used as inner lining material in anti-ballistic systems, such as polyurethane foams.

The fabric according to the present invention confers the benefits of a polyurethane foam layer, which are resilience and a cushioning effect that reduce the likelihood of ricochets, but without suffering from its shortcomings.

A disadvantage of polyurethane foams is that they get easily damaged when subjected to the deformation that occurs during a ballistic event.

During a ballistic event, the material surrounding the point of impact is pushed back into a cone shape by the projectile. Depending on the velocity and caliber of the projectile, the depth of the cone deformation can be considerable.

The deformation rips the polyurethane foams apart and/or causes cracks to form in the polyurethane foam.

However, the fabric according to the present invention does not rip apart easily as it comprises ballistic grade fibers.

The presence of ballistic grade fibers in the fabric according to the present invention confers anti-ballistic properties to the fabric.

Polyurethane foams, on the contrary, offer no ballistic protection.

When a projectile such as a fragmenting bullet enters the protective layer of an anti-ballistic system, the fragmenting bullet forms a multitude of small, irregularly shaped fragments that are usually stopped by the anti-ballistic layer (the pack) of the anti-ballistic system. However, some of these fragments can penetrate the anti-ballistic layer (the pack) and cause considerable damage to the wearer.

The fibers used in the fabric according to the present invention have a high tensile modulus and a high tenacity that confer ballistic protection to the fabric in addition to the cushioning effect that reduces the likelihood of ricochets.

In general, the protective action of a given fabric depends on how much fibers contact a projectile. The felts of the present invention have a high areal density of fibers. They are thus able to considerably slow down or even stop fragments of projectiles that may pass through the actual ballistic pack.

In a further embodiment, the fabric according to the present invention can be affixed in between the individual layers of a ballistic pack to reduce the occurrence of ricochets in ballistic events.

The fabric according to the present invention can be affixed by sewing, crimping, clinching, glueing, nailing and/or combinations therof.

Preferably, the fabric according to the present invention is affixed by sewing.

The fabric according to the present invention can be affixed in between an equal or nonequal number of individual layers of the ballistic pack.

### EXAMPLES

### EXAMPLE 1

### Preparation of a Laminated Para-aramid Woven Layer

Poly-p-phenylene terephtalamide yarns having a linear density of 1100 dtex were woven into a plain weave fabric having 8.5 ends/cm (warp) and 8.5 ends/cm (weft) and were subsequently laminated with a ionomer film having a thickness of 55 µm.

The ionomer was a copolymer of ethylene and 19 wt-% MAA (methacrylic acid), wherein 45% of the available carboxylic acid moieties were neutralized with sodium cations (product supplied by E. I. du Pont de Nemours and Company, Wilmington, Delaware under the trademark Surlyn®).

Poly-p-phenylene terephtalamide yarns are commercially available from E.I. du Pont de Nemours and Company (Wilmington, USA) under the trade name Kevlar® 1 K1533.

The laminated para-aramid woven layer is commercially available from E.I. du Pont de Nemours and Company (Wilmington, USA) under the trade name Kevlar® AS 400 S 802.

### EXAMPLE 2

### Preparation of a Fabric according to the Invention and Assembly into a Ballistic Pack

A layer of a nonwoven fabric batting consisting of 75 % by weight of poly-p-phenylene terephtalamide fibers, relative to the total weight of the nonwoven fabric, and 25 % by weight of polyethylene terephthalate, relative to the total weight of the nonwoven fabric, having a total areal weight of 335 g/m2 was superposed on a layer of a plain weave para-aramid fabric, having an areal weight of 185 g/m2, to form a stack. The stack was then subjected to needle felting consolidation to obtain a thickness of about 2.72 mm, measured according to ISO 9073:2. The resulting felted material was tested according EN 29073-3 for tensile strength and according to DIN 53859-4 for tear strength. The results are summarized in Table 1.

The resulting fabric according to the present invention was then positioned between 16 layers of para-aramid laminated fabric (AS 400 S 802) and then 14 layers of para-aramid laminated fabric (AS 400 S 802) to form a multilayered ballistic pack having a core layer consisting of the fabric according to the present invention and a total areal weight of 7.756 kg/m2. The obtained multilayered ballistic pack was then conditioned at room temperature for 24 hours before being subjected to several tests

During the tests, the multilayered ballistic pack was oriented such as to position the 16 layers of the para-aramid laminated fabric (AS 400 S 802) on the strike face.

The plain weave para-aramid woven layer is commercially available from E.I. du Pont de Nemours and Company (Wilmington, USA) under the trade name Kevlar® ST 802.

### EXAMPLE 3

### Knife and Spike Resistance Test

The stack manufactured according to example 2 was subjected to knife and spike resistance according to the HOSDB Body armour Standards for UK Police (2007) Part 3 from the United Kingdom Home Office, Scientific Development Branch, using a P1 B test blade having 24 and 36 joules of attacking energy, a backing material made of foam and a number of 5 drops of the same blade.
Results were recorded and are summarized in Table 2.

### EXAMPLE 4

### Ballistic Test

Ricochet occurrence was tested on the stack manufactured according to example 2, according to HOSDB HG2 using .357 Magnum SJHP Remington cartridges for both 0° shots and 30° angle shots. A ricochet was considered not to have occurred when the bullet remained stuck in the multilayered ballistic pack, instead of being redirected. The projectiles 0.357 Magnum , Remington SPFN,R357M3 had a velocity of about 455 m/s. The occurrence of ricochets was recorded and results are summarized in Table 3.

### COMPARATIVE EXAMPLE 1

### Preparation of the Comparative Fabric of Prior Art and Assembly into Pack

The comparative stack was a 33-layer multilayer ballistic pack, consisting of 33 layers of laminated para-aramid fabric (AS 400 S 802). The 33 layers were assembled together to obtain a multilayer ballistic pack having essentially the same areal weight (7.965 kg/m2) as the pack according to Example 2.
The obtained multilayered ballistic pack was then conditioned at room temperature for 24 hours before being subjected to several tests.

Poly-p-phenylene terephtalamide yarns are commercially available from E.I. du Pont de Nemours and Company (Wilmington, USA) under the trade name Kevlar® 1 K1533.
The laminated para-aramid fabric is commercially available from E.I. du Pont de Nemours and Company (Wilmington, USA) under the trade name Kevlar® AS 400 S 802.

### COMPARATIVE EXAMPLE 2

### Knife and Spike Resistance Test

The comparative stack manufactured according to comparative example 1 was subjected to knife and spike resistance tests according to example 3. Results were recorded and are summarized in Table 2.

### COMPARATIVE EXAMPLE 3

### Ballistic Test

The comparative stack manufactured according to comparative example 1 was subjected to ballistic tests according to example 4. The occurrence of ricochets was recorded and results are summarized in Table 3.

**Table 1**

| | Test method | | Unit | Value |
|---|---|---|---|---|
| Weight | DIN EN 29073P1 | | g/m2 | 521 |
| Thickness | DIN EN ISO 9073P2 | | mm | 2.72 |
| Tensile strength | DIN EN 29073P3 | long. | N/5cm | 963 |
| | | cross | N/5cm | 1655 |
| Tearing strength | DIN 53859T4 | long | N | 250 |
| | | cross | N | 362 |

Table 1 shows results of tests for determining mechanical properties of the felted fabric. As can be seen the felt has good mechanical properties. The woven layer that is felted together with the batting layer during the felting process confers additional mechanical stability to the felted fabric according to the present invention.

**Table 2**

| **Pack description** | **Pack density (kg/m²)** | **Backing** | **Protection level** | **Energy Level (Joule)** | **Blade** | **Blade penetration (mm)** |
|---|---|---|---|---|---|---|
| | | | | | | |
| 33*AS400S | 7.956 | Foam | KR1/E1 | 24 | P1B | **0,0,0,0,0** |
| 16*AS400S+FF520+14*AS400S | 7.756 | Foam | KR1/E1 | 24 | P1B | **0,0,0,0,0** |
| 33*AS400S | 7.956 | Foam | KR1/E2 | 36 | P1B | **10,10,8,9,9** |
| 16*AS400S+FF520+14*AS400S | 7.756 | Foam | KR1/E2 | 36 | P1B | **9,12,11,10,9** |

Table 2 shows the results of tests according to the HOSDB Body armour Standards for UK Police (2007) Part 3 from the United Kingdom Home Office, Scientific Development Branch, using a P1 B test blade having 24 and 36 joules, respectively. 5 knive drops were performed and recorded on the comparative fabric (33*AS400S) and the fabric according to the invention (16*AS400S+FF520+14*AS400S). The blade penetration corresponding to each knife drop is shown in millimeters, separated by commas. Both fabrics comply with requirements of the KR1/E1 and KR2/E2 protection levels.

| | **Pack weight (g)** | **Pack density (kg/m²)** | **Backing** | **Bullet** | **Angle (°)** | **Trauma (mm)** | **Average (mm)** | **Complete, partial or slip'out** |
|---|---|---|---|---|---|---|---|---|
| | 1273 | 7956 | Plastiline Roma | 357 Remington SJHP | 30 | 14 | 13.5 | slip'out |
| | 1273 | 7956 | Plastiline Roma | 357 Remington SJHP | 30 | 13 | 13.5 | slip'out |
| +FF520+14*AS400S | 1241 | 7756 | Plastiline Roma | 357 Remington SJHP | 30 | 12 | 13 | Held |
| +FF520+14*AS400S | 1241 | 7756 | Plastiline Roma | 357 Remington SJHP | 30 | 14 | 13 | Held |

Table 3 shows the results of the HOSDB HG2 test s using .357 Magnum SJHP Remington cartridges for two 30° angle shots. The control fabric (33*AS400S) did not retain the bullet, which means that a ricochet occurred in 2 out of 2 cases. The fabric according to the invention (16*AS400S+FF520+14*AS400S) did hold the bullet inside, so there was no ricochet that occurred in 2 out of 2 cases.

As can be seen from Table 3, the fabric according to the present invention offers a higher degree of protection against ricochet occurrence. However, it still offers a comparable degree of protection against projectiles at 0° when compared to a control fabric having about the same weight (data not shown). It is believed that the higher degree of protection against ricochets arises from the core layer made of a felt fabric.

The mechanical properties of the felted fabric allow the fabric to maintain its structural integrity in the case of a ballistic event. The mechanical properties derive at least in part from the woven layer that is felted into the batting during the felting process and which prevents the felted fabric to rip or give way in the case of a ballistic event.

## Claims

1. A fabric comprising at least one woven layer and at least one nonwoven layer, wherein the number ratio between the at least one woven layer and the at least one nonwoven layer is in the range of 0.1 to 1, and further wherein the at least one woven layer comprises fibers having a tenacity of from 180 cN/Tex to 320 cN/Tex and a tensile modulus of from 3600 cN/Tex to 10600 cN/Tex, and the at least one nonwoven layer comprises a blend of at least one aramid fiber and at least one polyester fiber,
wherein the fabric is formed by combining the at least one woven layer with at least one nonwoven batting layer in a felting loom to form a stack and subjecting the resulting stack then to a felting process, which combines the woven layers and nonwoven batting layers into said fabric.

2. The fabric according to claim 1, wherein the at least one nonwoven layer comprises two-cut or multiple-cut fibers.

3. The fabric according to claim 1 or 2, wherein the total amount of layers consisting of the sum of the number of woven layers and the number of nonwoven layers is from 2 to 10.

4. The fabric according to claim 3, wherein the total amount of layers consisting of the sum of the number of woven layers and the number of nonwoven layers is from 2 to 4.

5. The fabric according to any preceding claim, wherein the number ratio between the at least one woven layer and the at least one nonwoven layers is in the range of 0.1 to 0.9.

6. The fabric according to any preceding claim, wherein the weight ratio between the at least one woven layer and at least one nonwoven layer is between 0.1 to 5.

7. The fabric according to any preceding claim, wherein the blend of the at least one aramid fiber and the at least one polyester comprises from 70 to 99 % by weight of aramid fibers and from 1 to 30 % byweight of polyester, relative to the total weight of the at least one nonwoven layer.

8. Use of a fabric according to claims 1 to 7 as a means to reduce ricochet occurrence in ballistic events.

9. The use of a fabric according to claim 8, wherein the nonwoven layer comprises two-cut or multiple-cut fibers.

10. The use of a fabric according to claim 8 or 9, wherein the total amount of layers consisting of the sum of the number of woven layers and the number of nonwoven layers is from 2 to 10.

11. A personal protection device comprising a fabric according to claims 1 to 7.

## Patentansprüche

1. Textilstoff umfassend mindestens eine gewebte Lage und mindestens eine Vliesstofflage, wobei das Zahlenverhältnis zwischen der mindestens einen gewebten Lage und der mindestens einen Vliesstofflage im Bereich von 0,1 bis 1 liegt und wobei des Weiteren die mindestens eine gewebte Schicht Fasern umfasst, die eine Reißfestigkeit von 180 cN/tex bis 320 cN/tex und ein Zugmodul von 3600 cN/tex bis 10600 cN/tex aufweisen und die mindestens eine Vliesstofflage eine Mischung von mindestens einer Aramidfaser und mindestens einer Polyesterfaser umfasst,
wobei der Textilstoff durch Kombinieren der mindestens einen gewebten Lage mit mindestens einer Vliesstoffwattierungslage in einem Filzwebstuhl, um einen Stapel zu bilden, und Unterwerfen des resultierenden Stapels dann einem Verfilzungsvorgang gebildet wird, durch den die gewebten Lagen und die Vliesstoffwattierungslagen zu dem Textilstoff kombiniert werden.

2. Textilstoff nach Anspruch 1, wobei die mindestens eine Vliesstofflage Faser von zwei oder mehreren Stücklängen umfasst.

3. Textilstoff nach Anspruch 1 oder 2, wobei die Gesamtmenge der Lagen, die aus der Summe der Anzahl gewebter Lagen und der Anzahl von Vliesstofflagen bestehen, 2 bis 10 beträgt.

4. Textilstoff nach Anspruch 3, wobei die Gesamtmenge der Lagen, die aus der Summe der Anzahl gewebter Lagen und der Anzahl von Vliesstofflagen bestehen, 2 bis 4 beträgt.

5. Textilstoff nach einem der vorhergehenden Ansprüche, wobei das Zahlenverhältnis zwischen der mindestens einen gewebten Lage und der mindestens einen Vliesstofflage im Bereich von 0,1 bis 0,9 liegt.

6. Textilstoff nach einem der vorhergehenden Ansprüche, wobei das Gewichtsverhältnis zwischen der mindestens einen gewebten Lage und der mindestens einen Vliesstofflage zwischen 1,5 und 5 liegt.

7. Textilstoff nach einem der vorhergehenden Ansprüche, wobei die Mischung der mindestens einen Aramidfaser und der mindestens einen Polyesterfaser 70 bis 99 Gew.-% Aramidfasern und 1 bis 30 Gew.-% Polyesterfasern, auf das Gesamtgewicht der mindestens einen Vliesstofflage bezogen, umfasst.

8. Verwendung eines Textilstoffs nach den Ansprüchen 1 bis 7 als Mittel zum Reduzieren des Abprallgeschehens bei ballistischen Vorfällen.

9. Verwendung eines Textilstoffs nach Anspruch 8, wobei die Vliesstofflage Fasern von zwei oder mehreren Stücklängen umfasst.

10. Verwendung eines Textilstoffs nach Anspruch 8 oder 9, wobei die Gesamtmenge an Lagen, die aus der Summe der Anzahl gewebter Lagen und der Anzahl von Vliesstofflagen bestehen, 2 bis 10 beträgt.

11. Persönliche Schutzvorrichtung umfassend einen Textilstoff nach den Ansprüchen 1 bis 7.

## Revendications

1. Textile comprenant au moins une couche tissée et au moins une couche non tissée, le rapport numérique entre la au moins une couche tissée et la au moins une couche non tissée se situant dans la plage de 0,1 à 1, et en outre la au moins une couche tissée comprenant des fibres ayant une ténacité de 180 cN/Tex à 320 cN/Tex et un module d'élasticité en traction de 3 600 cN/Tex à 10 600 cN/Tex, et la au moins une couche non tissée comprenant un mélange d'au moins une fibre d'aramide et d'au moins une fibre de polyester,
le textile étant formé en combinant la au moins une couche tissée à au moins une couche non tissée formant nappe dans un métier de feutrage pour former une pile et en soumettant ensuite la pile résultante à un procédé de feutrage, qui associe les couches tissées et les couches non tissées formant nappe à l'intérieur dudit textile.

2. Textile selon la revendication 1, la au moins une couche non tissée comprenant des fibres à deux découpes ou à découpe multiple.

3. Textile selon la revendication 1 ou 2, la quantité totale des couches constituant la somme du nombre des couches tissées et du nombre des couches non tissées étant de 2 à 10.

4. Textile selon la revendication 3, la quantité totale des couches constituant la somme du nombre des couches tissées et du nombre des couches non tissées étant de 2 à 4.

5. Textile selon l'une quelconque des revendications précédentes, le rapport numérique entre la au moins une couche tissée et la au moins une couche non tissée étant situé dans la plage de 0,1 à 0,9.

6. Textile selon l'une quelconque des revendications précédentes, le rapport en poids entre la au moins une couche tissée et la au moins une couche non tissée étant compris entre 0,1 à 5.

7. Textile selon l'une quelconque des revendications précédentes, le mélange de la au moins une fibre d'aramide et de la au moins une fibre de polyester comprenant de 70 à 99 % en poids de fibres d'aramide et de 1 à 30 % en poids de fibres de polyester, par rapport au poids total de la au moins une couche non tissée.

8. Utilisation d'un textile selon les revendications 1 à 7 comme moyen de réduire l'apparition de ricochet dans les événements balistiques.

9. Utilisation d'un textile selon la revendication 8, la couche non tissée comprenant des fibres à deux découpes ou à découpe multiple.

10. Utilisation d'un textile selon la revendication 8 ou 9, la quantité totale des couches constituant la somme du nombre des couches tissées et du nombre des couches non tissées étant de 2 à 10.

11. Dispositif de protection individuelle comprenant un textile selon les revendications 1 à 7.
